Europäisches Patentamt

European Patent Office

Office européen des brevets

(11) Veröffentlichungsnummer: **0 060 441**
A1

(12) # EUROPÄISCHE PATENTANMELDUNG

(21) Anmeldenummer: **82101623.5**

(51) Int. Cl.³: **F 16 B 25/00**

(22) Anmeldetag: **03.03.82**

(30) Priorität: **13.03.81 DE 3109694**

(71) Anmelder: **Häfele KG, Postfach 160 Freudenstädter Strasse 74, D-7270 Nagold (DE)**

(43) Veröffentlichungstag der Anmeldung: **22.09.82 Patentblatt 82/38**

(72) Erfinder: **Koch, Gerhard, Bondörfer Weg 28, D-7270 Nagold (DE)**

(74) Vertreter: **Vogel, Georg, Hermann-Essig-Strasse 35, D-7141 Schwieberdingen (DE)**

(84) Benannte Vertragsstaaten: **AT BE CH FR GB IT LI NL SE**

(54) Verbinder für ein quer zueinander stehendes Paar von Platten aus Holz, Holzspänen oder dgl.

(57) Die erste Platte weist eine zu ihrer Plattenebene parallel verlaufende Sacklochbohrung und die zweite Platte eine zu ihrer Plattenebene quer verlaufende, mit der Sacklochbohrung achsgleiche Durchgangsbohrung auf. Der Verbinder weist einen in die Sacklochbohrung einschraubbaren Gewindeabschnitt mit sägezahnartiger Wendel (13), im Bereich der Durchgangsbohrung einen gewindelosen Paßabschnitt (12) und als Endanschlag einen in die Durchgangsbohrung einlaßbaren Senkkopf (11) auf. Um ein Ansenken der Durchgangsbohrung in der zweiten Platte zu vermeiden, ist vorgesehen, daß der Paßabschnitt in einen Senkkopf übergeht, der aus mindestens zwei im Durchmesser stufig zunehmenden Zylinderabschnitten (20, 22) gebildet ist, wobei die Übergangsbereiche von dem Paßabschnitt zum ersten Zylinderabschnitt und zwischen den Zylinderabschnitten kegelstumpfartig (21, 23, 24) ausgebildet sind.

Der so ausgebildete Senkkopf wird beim Einschrauben des Verbinders in die Sacklochbohrung der ersten Platte in die Durchgangsbohrung der zweiten Platte eingezogen, ohne daß dabei ein Überdrehen des Verbinders zu befürchten ist.

Verbinder für ein quer zueinander stehendes Paar
von Platten aus Holz, Holzspänen oder dgl.

Die Erfindung betrifft einen Verbinder für ein quer zueinander stehendes Paar von Platten aus Holz, Holzspänen oder dgl., wobei die
erste Platte eine zu ihrer Plattenebene parallel verlaufende Sacklochbohrung und die zweite Platte eine zu ihrer Plattenebene quer
verlaufende, mit der Sacklochbohrung achsgleiche Durchgangsbohrung
aufweisen, der einen in die Sacklochbohrung einschraubbaren Gewindeabschnitt mit sägezahnartiger Wendel, im Bereich der Durchgangsbohrung einen gewindelosen Paßabschnitt und als Endanschlag einen in die
Durchgangsbohrung einlaßbaren Senkkopf aufweist.

Ein derartiger einstückiger Verbinder ist aus der DE-As 24 52 054
bekannt und dient vorwiegend zur Verbindung von Spanplatten, wobei
die Verbindung mehrfach gelöst und wieder hergestellt werden kann,
ohne den Halt der Verbindung zu verschlechtern. Der Senkkopf dient
dabei als Endanschlag, um die zweite Platte fest an die erste Platte
heranzuziehen. Die Sacklochbohrung in der ersten Platte und die
Durchgangsbohrung in der zweiten Platte können dabei mit demselben
Bohrer eingebracht werden, was die Einbringung dieser Bohrungen sehr
vereinfacht und erleichtert. Damit der Senkkopf bündig in die zweite
Platte eingelassen werden kann, muß die Durchgangsbohrung in der
zweiten Platte auf der Außenseite mit einem größeren Bohrer angesenkt
werden. Dies bringt einen zusätzlichen Aufwand an Rüst- und Arbeitszeit, da ein Bohrerwechsel vorgenommen werden muß.

Es ist Aufgabe der Erfindung, einen Verbinder der eingangs erwähnten Art so zu gestalten, daß auf das Ansenken der Durchgangsbohrung in der zweiten Platte verzichtet werden kann, ohne jedoch befürchten zu müssen, daß beim Eindrehen des Verbinders der Senkkopf nicht vollständig in die Durchgangsbohrung eingelassen und der Halt des Verbinders in der Saklochbohrung der ersten Platte dabei verschlechtert werden könnte.

Diese Aufgabe wird nach der Erfindung dadurch gelöst, daß der Paßabschnitt in einen Senkkopf übergeht, der aus mindestens zwei im Durchmesser stufig zunehmenden Zylinderabschnitten gebildet ist, wobei die Übergangsbereiche von dem Paßabschnitt zum ersten Zylinderabschnitt und zwischen den Zylinderabschnitten kegelstumpfartig ausgebildet sind.

Mit dieser Auslegung des Senkkopfes, der über kegelstumpfartige Übergangsbereiche und Zylinderabschnitte mehrfach stufig abgesetzt ist, wird erreicht, daß der Senkkopf das äußere Ende der Durchgangsbohrung in der zweiten Platte beim Eindrehen des Verbinders in die Sacklochbohrung der ersten Platte in kleinen definierten Stufen selbst aufweitet und den zum Einlassen des Senkkopfes in die Durchgangsbohrung der zweiten Platte erforderlichen Platz selbst schafft. Der stufige Anstieg der dafür erforderlichen zusätzlichen Spannkraft ist dabei auf die Zunahme des Halte des Verbinders in der Sacklochbohrung der ersten Platte abgestimmt, so daß ein Überdrehen des Verbinders in der Sacklochbohrung der ersten Platte nicht zu befürchten ist. Auf das Ansenken der Durchgangsbohrung in der zweiten Platte kann verzichtet werden. Dies bringt unverkennbare Vorteile beim Herstellen der Bohrungen.

- 3 -

Damit für das Überdrehen des Verbinders eine ausreichende Sicherheit verbleibt, ist nach zweckmäßigen Ausgestaltungen vorgesehen, daß die Stufung der Durchmesser der Zylinderabschnitte zum Paßabschnitt und zwischen den Zylinderabschnitten gleich groß ist und etwa 10% des Durchmessers des Paßabschnittes beträgt, und daß die Übergangsbereiche zwischen dem Paßabschnitt und dem ersten Zylinderabschnitt und zwischen den Zylinderabschnitten, bezogen auf das Ende des Senkkopfes, in einem Winkel von etwa 60° zur Mittelachse des Paßabschnittes stehen. Diese im Verhältnis zum Durchmesser des Paßabschnittes kleinen Stufen der Zylinderabschnitte bringen kleine stufige Anstiege der Spannkraft im Endbereich der Eindrehbewegung des Verbinders und diese Auslegung der kegelstumpfartigen Übergangsbereiche stellt sicher, daß die axiale Länge des so abgestuften Senkkopfes nicht zu groß wird. Dazu ist dann nach einer weiteren Ausgestaltung vorgesehen, daß die axiale Länge eines Übergangsbereiches etwa 3 - 4 % des Durchmessers des Paßabschnittes entspricht und daß die axiale Länge der Zylinderabschnitte etwa 6 - 7 % des Durchmessers des Paßabschnittes entspricht.

Um ausreichenden Platz zur Einbringung einer Innensechskant- oder einer Kreuzschlitz-Werkzeugaufnahme an dem abgestuften Senkkopf zu erhalten, kann nach einer Weiterbildung vorgesehen sein, daß der Zylinderabschnitt mit dem größten Durchmesser etwa die doppelte axiale Länge aufweist.

Damit die Sacklochbohrung in der ersten Platte und die Durchgangsbohrung mit einheitlichem, dem Durchmesser des Paßabschnittes entsprechenden Durchmesser eingebracht werden können, sieht eine weitere Ausgestaltung zur Erreichung eines ausreichenden Haltes des Gewindeabschnittes des Verbinders in der Sacklochbohrung der ersten Platte und zur Reduzierung der Spannkraft für das Einlassen des Senkkopfes in die Durchgangsbohrung der zweiten Platte vor, daß der Außendurchmesser des Gewindeabschnittes etwa 20 % größer ist als der Durchmesser des Paßabschnittes und daß der Durchmesser des Kerns des Gewindeabschnittes geringfügig kleiner ist als der Durchmesser des Paßabschnittes. Beim Eindrehen des Verbinders wird durch den Gewindeabschnitt die Wandung der Durchgangsbohrung in der zweiten Platte so weit aufgelockert, daß die Aufweitung der Durchgangsbohrung für den Senkkopf erleichtert wird.

Damit der Verbinder beim Einschrauben in die Sacklochbohrung der ersten Platte zentrisch geführt wird, sieht eine Weiterbildung vor, daß der Gewindeabschnitt in eine gewindelose Führungsspitze ausläuft, die vorzugsweise als Zylinderabschnitt mit einer mit Phase versehenen Vorderkante ausgebildet ist.

Das Moment zum Einschrauben des Verbinders läßt sich bei maximaler Auszugskraft dadurch klein halten, daß, bezogen auf die Führungsspitze, die Vorderflanken der Zähne des Gewindeabschnittes zur Mittellängsachse des Kerns in einem Winkel von etwa 120° und die Rückflanken in einem Winkel von etwa 75° stehen.

Die Erfindung wird anhand eines in den Zeichnungen dargestellten Ausführungsbeispiels näher erläutrt. Es zeigt:

Fig. 1 einen Verbinder nach der Erfindung in Seitenansicht,

Fig. 2 in vergrößertem Maßstab den Bereich II mit dem Senkkopf des Verbinders nach Fig. 1 und

Fig. 3 einen Teilschnitt im Bereich III des Gewindeabschnittes des Verbinders nach Fig. 1.

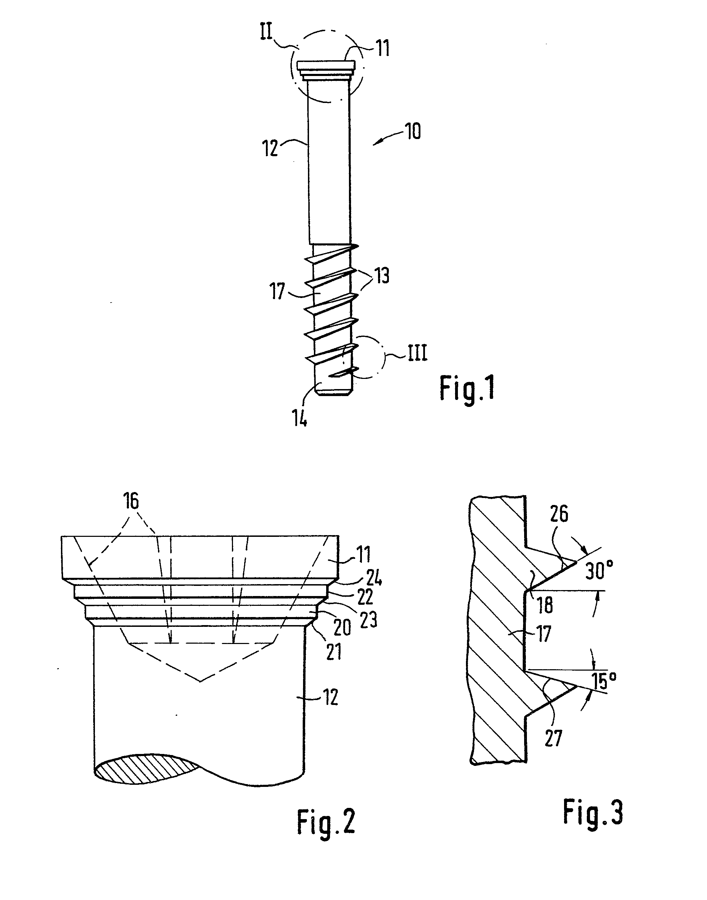

Wie die Ansicht nach Fig. 1 erkennen läßt, besteht der Verbinder nach
der Erfindung aus einem sägezahnartigen Gewindeabschnitt 13 mit
Zähnen 18, einem anschließenden gewindelosen Paßabschnitt 12 und dem
als Endanschlag dienenden Senkkopf. Die Spitze des Verbinders 10
läuft in eine Führungsspitze 14 aus, deren Vorderkante abgeschrägt
ist.

Der Verbinder 10 nach Fig. 1 dient zur Verbindung eines quer zueinander stehenden Paares von Platten aus Holz, Holzspänen oder dgl.
Dabei ist in die erste Platte eine zu ihrer Plattenebene parallel
verlaufende Sacklochbohrung eingebracht und die zweite Platte weist
eine zu ihrer Plattenebene quer verlaufende, mit der Sacklochbohrung
achsgleiche Durchgangsbohrung auf. Beide Bohrungen werden mit ein und
demselben Bohrer eingebracht, dessen Durchmesser dem Durchmesser des
Paßabschnittes 12 entspricht. Die axiale Abmessung des Paßabschnittes
12 ist größer als die Stärke der zweiten Platte.

Der Außendurchmesser des Gewindeabschnittes 13 ist größer als der
Durchmesser des Paßabschnittes 12 und zwar etwa um 20 % des Durchmessers des Paßabschnittes 12. Der Durchmesser des Kernes 17 des
Gewindeabschnittes 13 ist lediglich geringfügig kleiner als der
Durchmesser des Paßabschnittes 12.

Wie der Teilschnitt nach Fig. 3 zeigt, sind die Zähne 18 im Querschnitt dreieckförmig, wobei die Vorderflanken 26, bezogen auf die
Führungsspitze 14, zur Mittellängsachse des Gewindeabschnittes 13 in
einem Winkel von etwa 120° stehen. Die Rückflanken 27 der Zähne 18

stehen, auf die Führungsspitze 14 bezogen, dagegen in einem Winkel von etwa 75° zur Mittellängsachse des Gewindeabschnittes 13. Mit dieser Auslegung des Gewindeabschnittes 13 wird erreicht, daß der Verbinder 10 mit kleinem Moment in die Sacklochbohrung der ersten Platte eingeschraubt werden kann, die Verbindung dabei aber ein Maximum an Auszugskraft abfangen kann. Außerdem wird beim Durchdrehen des Verbinders 10 durch die Durchgangsbohrung der zweiten Platte über den im Durchmesser etwas größeren Gewindeabschnitt die Wandung der Durchgangsbohrung aufgelockert, so daß der Senkkopf des Verbinders ohne großen Momentanstieg in die Durchgangsbohrung eingezogen werden kann.

Um diesen Einziehvorgang des Senkkopfes zu erleichtern, ist dieser mehrfach abgestuft, wie die vergrößerte Teilansicht nach Fig. 2 zeigt. Der Paßabschnitt 12 geht über einen kegelstumpfartigen Übergangsbereich 21 in einen Zylinderabschnitt 20 über, dessen Durchmesser etwa um 10 % des Durchmessers des Paßabschnittes 12 größer ist. Der Zylinderabschnitt 20 geht wiederum über den kegelstumpfartigen Übergngsbereich 23 in den Zylinderabschnitt 22 über. Der Zylinderabschnitt 22 ist im Durchmesser wiederum größer als der Durchmesser des Zylinderabschnittes 20. Die Zunahme ist etwa gleich groß und entspricht wieder etwa 10 % des Durchmessers des Paßabschnittes 12. Schließlich geht der Zylinderabschnitt 20 über den kegelstumpfartigen Übergangsbereich 24 in den Zylinderabschnitt 11 über, der den größten Durchmesser aufweist. Die Zunahme im Durchmesser ist wieder etwa gleich und entspricht etwa 10 % des Durchmessers des Paßabschnittes 12. Bei dieser Abstufung des Senkkopfes kommt es auch noch auf die axiale Länge der Übergangsbereiche 21, 23 und 24, sowie auf die axiale Länge der Zylinderabschnitte 20,22 und 11 an. Die axialen Längen der Übergangsbereiche 21, 23 und 24 sind gleich groß und entsprechen etwa 3 - 4 % des Durchmessers des Paßabschnittes 12. Die axialen Längen der Zylinderabschnitte 20 und 22 sind gleich groß und entsprechen etwa 6 - 7 % des Durchmessers des Paßabschnittes 12 und sind daher etwa doppelt so groß wie die einheitliche axiale Länge der Übergangsbereiche 21, 23 und 24. Lediglich der letzte Zylinderabschnitt 11 hat eine axiale Länge, die etwa doppelt so groß ist wie die axiale Länge der übrigen Zylinderabschnitte 20 und 22. Damit ist genügend Raum, um in dem Senkkopf eine Werkzeugaufnahme 16 unterbringen zu können, welche als Innensechskant- oder als Kreuzschlitz-Werkzeugaufnahme ausgebildet sein kann.

Beim Einschrauben des Verbinders 10 stößt zunächst der Übergangsbereich 21 an die Durchgangsbohrung in der zweiten Platte und verdrängt die aufgelockerte Wandung so weit, daß der Zylinderabschnitt 20 eingezogen werden kann. Diese Verdrängung der Wandung der Durchgangsbohrung bedingt eine Zunahme im Moment. Diese Zunahme ist aber klein, so daß dadurch ein Überdrehen des Verbinders 10 nicht zu befürchten ist. Ist der Zylinderabschnitt 20 in die Durchgangsbohrung der zweiten Platte eingezogen, dann wird über den Übergangsbereich 23 die Wandung der Durchgangsbohrung noch weiter verdrängt, so daß auch der Zylinderabschnitt 22 eingezogen werden kann. Dabei wird wieder eine stufige Zunahme des Momentes erforderlich. Da der Verbinder 10 aber schon weiter in die Sacklochbohrung der ersten Platte eingeschraubt ist, braucht ein Überdrehen des Verbinders 10 nicht befürchtet zu werden. Dies gilt auch dann, wenn schließlich der Übergangsbereich 24 die Durchgangsbohrung in der zweiten Platte so aufweitet, daß auch der Zylinderabschnitt 11 mit dem größten Durchmesser in die Durchgangsbohrung der zweiten Platte eingezogen werden kann. Es hat sich bei den üblichen Verbindern mit einem Durchmesser von 5 bis 7 mm für den Paßabschnitt 12 als ausreichend erwiesen, den Senkkopf mit drei abgestuften Zylinderabschnitten 20, 22 und 11 auszulegen.

Ansprüche

1. Verbinder für ein quer zueinander stehendes Paar von Platten aus Holz, Holzspänen oder dgl., wobei die erste Platte eine zu ihrer Plattenebene parallel verlaufende Sacklochbohrung und die zweite Platte eine zu ihrer Plattenebene quer verlaufende, mit der Sacklochbohrung achsgleiche Durchgangsbohrung aufweisen, der einen in die Sacklochbohrung einschraubbaren Gewindeabschnitt mit sägezahnartiger Wendel, im Bereich der Durchgangsbohrung einen gewindelosen Paßabschnitt und als Endanschlag einen in die Durchgangsbohrung einlaßbaren Senkkopf aufweist, dadurch gekennzeichnet,
daß der Paßabschnitt (12) in einen Senkkopf übergeht, der aus mindestens zwei im Durchmesser stufig zunehmenden Zylinderabschnitten (20,22,11) gebildet ist, wobei die Übergangsbereiche (21,23,24) von dem Paßabschnitt (12) zum ersten Zylinderabschnitt (20) und zwischen den Zylinderabschnitten (20 und 22 bzw. 22 und 11) kegelstumpfartig ausgebildet sind.

2.    Verbinder nach Anspruch 1,
      dadurch gekennzeichnet,
      daß die Stufung der Durchmesser der Zylinderabschnitte
      (20,22,11) zum Paßabschnitt (12) und zwischen den Zylinderabschnitten (20 und 22 bzw. 22 und 11) gleich groß ist und etwa
      10% des Durchmessers des Paßabschnittes beträgt.

3.    Verbinder nach Anspruch 1 oder 2,
      dadurch gekennzeichnet,
      daß die Übergangsbereiche (21,23,24) zwischen dem Paßabschnitt
      (12) und dem ersten Zylinderabschnitt (20) und zwischen den
      Zylinderabschnitten (20 und 22 bzw. 22 und 11) bezogen auf das
      Ende des Senkkopfes in einem Winkel von etwa 60° zur Mittelachse des Paßabschnittes (12) stehen.

4.    Verbinder nach einem der Ansprüche 1 bis 3,
      dadurch gekennzeichnet,
      daß die axiale Länge eines Übergangsbereiches (21,23,24) etwa
      3-4 % des Durchmessers des Paßabschnittes (12) entspricht.

5.    Verbinder nach einem der Ansprüche 1 bis 4,
      dadurch gekennzeichnet,
      daß die axiale Länge der Zylinderabschnitte (20,22) etwa 6 - 7%
      des Durchmessers des Paßabschnittes (12) entspricht.

6.    Verbinder nach Anspruch 5,
      dadurch gekennzeichnet,
      daß der Zylinderabschnitt (11) mit dem größten Durchmesser etwa
      die doppelte axiale Länge aufweist.

7.    Verbinder nach einem der Ansprüche 1 bis 6,
      dadurch gekennzeichnet, daß der Außendurchmesser des Gewindeabschnittes (13) etwa 20 %
größer ist als der Durchmesser des Paßabschnittes (12) und
daß der Durchmesser des Kerns (17) des Gewindeabschnittes (13)
geringfügig kleiner ist als der Durchmesser des Paßabschnittes
(12).

8. Verbinder nach einem der Ansprüche 1 bis 7,
dadurch gekennzeichnet,
daß der Gewindeabschnitt (13) in eine gewindelose Führungsspitze (14) ausläuft, die vorzugsweise als Zylinderabschnitt
mit einer mit Phase versehenen Vorderkante ausgebildet ist.

9. Verbinder nach einem der Ansprüche 1 bis 8,
dadurch gekennzeichnet,
daß, bezogen auf die Führungsspitze (14), die Vorderflanken
(26) der Zähne (18) des Gewindeabschnittes (13) zur Mittellängsachse des Kerns (17) in einem Winkel von etwa 120° und die
Rückflanken in einem Winkel von etwa 75° stehen.

1/1

0060441

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 009 630 (GENERAL AMERICAN TRANSPORTATION) <br> * Fig. 6 * <br> -- | 1-3,5 |
| A | US - A - 3 748 949 (DREGER) <br> * Fig. 2 * <br> -- | 9 |
| A | FR - A1 - 2 370 884 (MONTICELLI) <br> * Fig. 10 * <br> -- | 1 |
| A | FR - A1 - 2 461 138 (STE GENERALE DE FORGEAGE DECOLLETAGE) <br> * Fig. 3 * <br> -- | 1 |
| A | DE - U - 7 708 427 (E-NORM-BESCHLAG) <br> * Fig. 1 * <br> ---- | 4 |

**KLASSIFIKATION DER ANMELDUNG (Int. Cl.³)**

F 16 B   25/00

**RECHERCHIERTE SACHGEBIETE (Int. Cl.³)**

F 16 B    5/00

F 16 B   12/00

F 16 B   25/00

F 16 B   39/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 26-05-1982 | ZAPP |

EPA form 1503.1   06.78